# EUROPEAN PATENT APPLICATION

(11) **EP 0 612 163 A2**
(43) Date of publication of application: **24.08.1994**
(21) Application number: 94300933.2
(22) Date of filing: 09.02.1994
(51) Int. Cl.: H04J 3/06, G06F 1/10

(54) **Electromagnetic emission reduction apparatus and method for clock pulse distribution system**

(30) Priority: 17.02.1993 US 18947
(71) Applicant: AT&T Corp., New York, NY 10013-2412 (US)
(72) Inventor: Gradl, David Arthur, Naperville, Illinios 60563 (US)
(74) Representative: Watts, Christopher Malcolm Kelway, Dr.

(57) **Abstract**

A synchronized digital system transmits clock pulses over a plurality of unbalanced transmission lines without causing objectionable electromagnetic emissions by inverting the clock pulses on one half of the transmission lines and interleaving the transmission lines carrying inverted clock pulses with transmission lines carrying non-inverted clock pulses. The interleaving of non-inverted and inverted clock pulse transmssion lines allows a significant degree of radiation and coupling cancellation.

## Description

### Field of the Invention

This invention relates to the transmission of clock pulses in a synchronized system and in particular to a method and apparatus for reducing electromagnetic emissions due to the transmission of clock pulses.

### Background of the Invention

The operation of a digital system depends upon the distribution of clock pulses to assure the synchronization of the various components and subcircuits of the system. Clock pulses have a broad spectral energy density that causes the generation of considerable electromagnetic emissions. Other types of digital signals such as data signals also generate electromagnetic emissions, however the clock pulses generate the strongest emission components.

Traditionally the clock pulse generated emissions have been suppressed by use of balanced digital signal transmission lines for transmission of clock pulses. These balanced digital signal transmission lines advantageously maximize common mode noise immunity and minimize common mode radiation. Unfortunately the use of balanced transmission lines adds significant cost and complexity to the system. This added complexity is a result of the need for special device drivers, connector pins and the use of special expensive transmission cables. Hence systems requiring a large number of clock pulse transmission lines must forgo this arrangement and use radiation rich unbalanced line interconnections in the interest of economy.

### Summary of the Invention

A synchronized digital system as defined in claim 1 transmits clock pulses over a plurality of unbalanced transmission lines without causing objectionable electromagnetic emissions.

### Brief Description of the Drawing

In the Drawing:
FIG. 1 is a schematic of a digital system having a clock pulse transmission arrangement embodying the principles of the invention;
FIG. 2 is a schematic of the application of the synchronizing pulse system of the invention applied to an array of circuit packs or boards arranged in a cabinet or other enclosure; and
FIG. 3 is a graph illustrating radiation emission reduction as a function of time skew between inverted and non-inverted clock pulses on adjacent clock transmission lines.

### Detailed Description

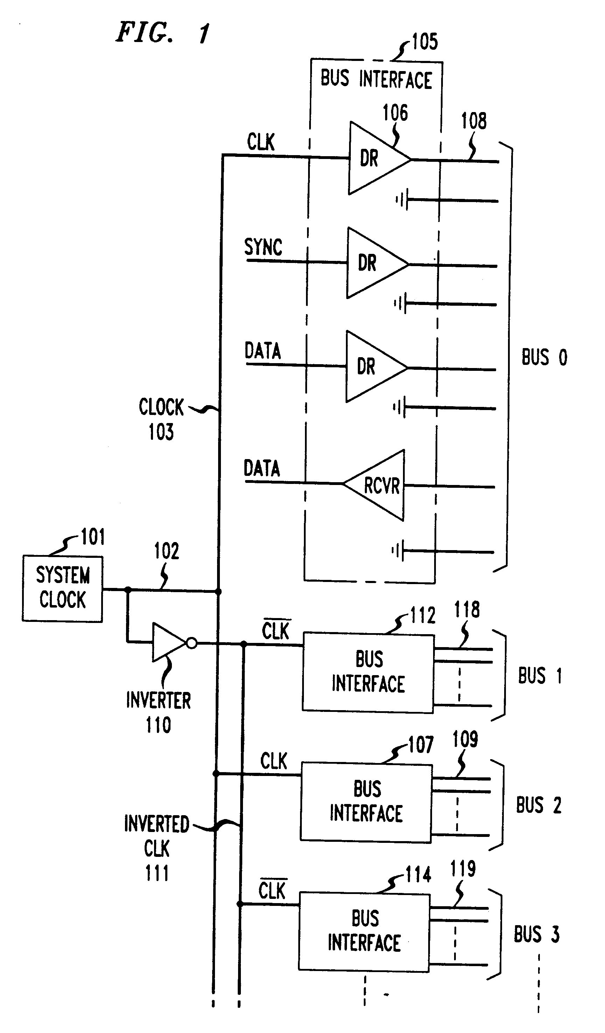

The clock pulse transmission scheme disclosed in FIG. 1 includes a system clock 101 for generating a series of clock pulses which are supplied over unbalanced transmission lines to various portions of a digital system to guarantee overall system synchronicity. The output of the system clock 101 is applied via a lead 102 to a first clock pulse transmission line 103. The clock pulses on the transmission line 103 are applied to the bus interface components 105, 107 and addition any ordinally odd numbered interface components (not shown in the FIG. 1).

Each interface component 105, 107, etc, has a drive circuit (such as drive circuit 106 in interface component 105) with an output 108, 109, respectively, that is connected to supply the synchronizing pulses and system data signals and data sync signals, via system busses, to the various components of the digital system.

The output of the clock 101 is also applied to a clock pulse inverting circuit 110. This inverting circuit 110 inverts the phase of the clock pulses by 180 degrees so that the clock pulse is a geometric inversion of the clock pulse's output of the system clock 101. These inverted clock pulses are applied to a second unbalanced clock pulse transmission line 111 which is connected to supply the inverted clock pulses to the interface components 112 and 114 and added ordinally even numbered interface components (which are not shown in the FIG. 1). Each interface component 112 and 114 includes drive circuits (not shown) and output lines 118 and 119 to supply synchronizing pulses to various components of the digital system.

The pulse transmission lines 102 and 111 are all unbalanced, in accord with the principles of the invention, and effective in transmitting clock pulses with reduced emission over economical transmission lines.

In accord with the invention the transmission lines, 103 and 111, carrying non-inverted clock pulses and inverted clock pulses, respectively, are interleaved so that individual ones of the inverted and non-inverted transmission lines are paired and located in close proximity to one another. For every transmission line 111 carrying an inverted clock pulse there is another transmission bus 103 carrying non-inverted clock pulses which is positioned in close physical proximity thereto and which follows a substantially similar path trajectory. In this physical arrangement the radiations generated by the inverted and non-inverted clock pulses are substantially canceled by one another.

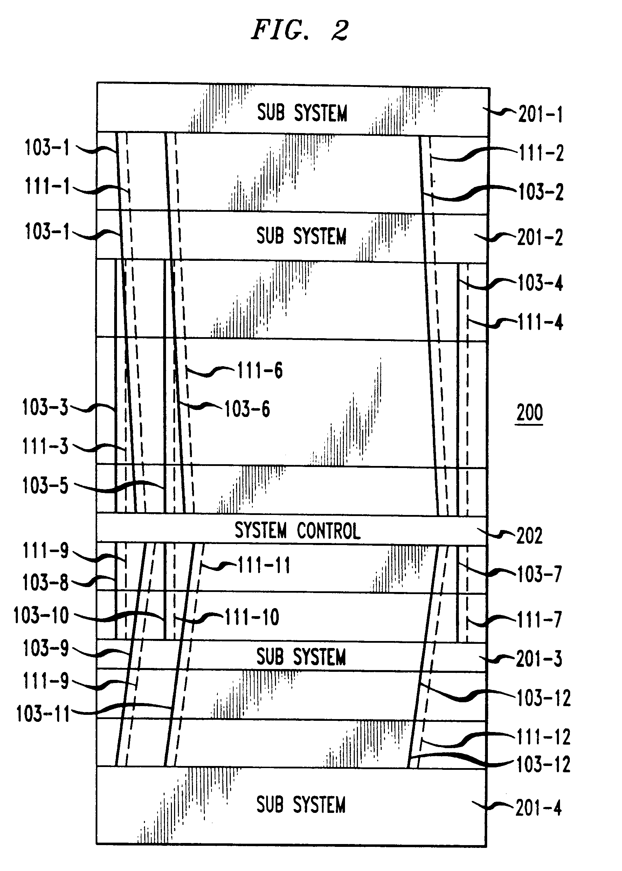

A typical system arrangement of interleaved system pulse transmission lines is shown in an elevation view in the illustrative system schematic of system clock pulse lines shown in FIG. 2. A plurality of circuit packs 201-n are shown in an end view of a system cabinet 200. The respective busses 103-n and 111-n are each located in close proximity to one another so that radiated emissions due to the clock pulses substantially cancel one another. The transmission lines 103-n are shown by solid lines and the transmission lines 111-n are shown by the dotted lines.

A system central control circuit unit, pack or board 202 includes a system clock and a pulse inverter as indicated in the FIG. 1. A plurality of clock pulse transmission lines 103-1 to 103-12 and 111-1 to 111-12 as shown in FIG. 2 are provided to couple the non-inverted and inverted synchronization clock pulses to the circuit packs 201-1 to 201-4 included within the system. The pulse transmission lines are carefully paired so that each transmission line carrying non-inverted clock pulses has a corresponding transmission line carrying inverted clock pulses located physically close to it which follows a substantially similar path trajectory.

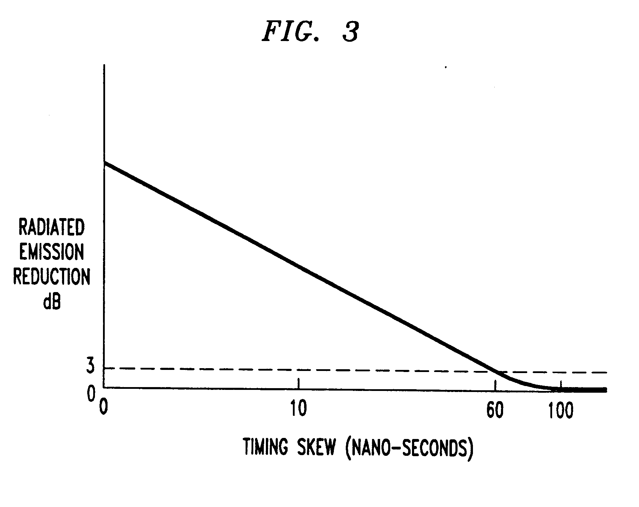

The illustrative frequency of operation of the illustrative clock pulse distribution system of FIG. 2 is 4 MHz. Twelve non-inverting transmission lines 103-n are shown individually paired with twelve inverting clock pulse transmission lines 111-n in FIG. 2. The non-inverted clock pulses and inverted clock pulses are substantially equal in magnitude and duration. Due to the internal delay of the inverting circuit, inverted clock pulses are delayed with respect to non-inverted clock pulses causing a timing skew between the inverted and non-inverted clock pulses. Other delays that arise may include the transmission lines signal propagation delay and logic circuit delay characteristics. A characteristic graph of the effect of this delay on radiated emission reduction is shown in the graph of FIG. 3. This graph relates the cancellation effectiveness of emission reductions in dB vs the timing skew for the complementary clock signals. As the time skew decreases, the effectiveness of emission cancellation increases. With the time skew measured in nano seconds and a 4 MHz system the effectiveness of cancellation is quite high (e.g. 3dB) as long as the time skew is less than 60 nanoseconds.

If a large time skew is encountered delay mechanisms may be inserted within the clock pulse transmission system to reduce the time skew. Such mechanisms may be inserted just subsequent to the clocks non-inverted output to compensate for the inversion delay, for example.

## Claims

1. A method of reducing harmonic emissions due to transmission of clock pulses over a plurality of clock pulse transmission lines in a synchronous digital system:
CHARACTERIZED BY:
inverting the clock pulses supplied over substantially one half of the clock pulse transmission lines;
interleaving clock pulse transmission lines carrying inverted clock pulses with distribution lines carrying non-inverted clock pulses.

2. A method of reducing harmonic emissions due to transmission of clock pulses as claimed in claim 1 further comprising the steps of:
interleaving clock pulse transmission lines such that transmission lines carrying non-inverted clock pulses are each individually paired with a transmission line carrying inverted clock pulses with each set of paired transmission lines following a nearly identical path trajectory.

3. A method of reducing harmonic emissions due to transmission of clock pulses as claimed in claim 2 further comprising the steps of:
evaluating radiation emission reduction by determining a time skew between non-inverted clock pulses and inverted clock pulses and providing an appropriate delay to minimize the skew.

4. Apparatus for distributing clock pulses in a synchronized digital system; comprising:
a source of synchronizing clock pulses (101);
a plurality of circuits to be synchronized and included within the digital system;
CHARACTERIZED BY:
circuitry for inverting clock pulses and connected to receive clock pulses from the source of synchronizing clock pulses (110);
a first series of clock pulse transmission lines (103) connected for coupling clock pulses from the source of synchronizing clock pulses to a first subplurality of the plurality of circuits to be synchronized;
a second series of clock pulse transmission lines (111) connected for coupling clock pulses from the circuitry for inverting clock pulses to a second subplurality of the plurality of circuits to be synchronized other than the first subplurality of the plurality of circuits to be synchronized;
the first and second series of pulse transmission lines having substantial cardinal numerical equality; and
individual ones of each the first and second series of pulse transmission lines being paired in close proximity with one another so that electromagnetic radiation of the transmitted clock pulses is substantially canceled.

5. Apparatus for distributing clock pulses in a synchronized digital system as claimed in claim 4; comprising:
each of the paired transmission lines being located adjacent to one another and following a substantially similar path from the source of synchronizing clock pulses to circuitry to be synchronized.

6. Apparatus for distributing clock pulses in a synchronized digital system as claimed in claim 5; comprising:
a plurality of non-inverted and inverted clock pulses on the paired transmission lines having phase related characteristics to limit time skew between the non-inverted and inverted clock pulses to enhance radiation emission cancellation.
